# EUROPÄISCHE PATENTSCHRIFT

(11) **EP 1 892 085 B1**
(45) Veröffentlichungstag und Bekanntmachung des Hinweises auf die Patenterteilung: **26.12.2012**
(21) Anmeldenummer: 07014145.2
(22) Anmeldetag: 19.07.2007
(51) Int. Cl.: B30B 15/02, B23P 19/02, B23B 31/20

(54) **Pressvorrichtung**
Compression device
Dispositif de presse

(30) Priorität: 24.08.2006 CH 13502006
(43) Veröffentlichungstag der Anmeldung: 27.02.2008
(73) Patentinhaber: Rego-Fix AG, 4456 Tenniken (CH)
(72) Erfinder: Brönnimann, Martin, 4452 Itringen (CH)
(74) Vertreter: Braun, André jr.

(56) Entgegenhaltungen:
- WO-A1-2004/016977
- DE-A1-102004 016 305
- DE-U1- 29 713 844
- US-A- 4 956 904
- US-A1- 2008 290 614
- US-B1- 6 199 254

## Beschreibung

Die vorliegende Erfindung betrifft eine Pressvorrichtung gemäß dem Oberbegriff des Anspruchs 1 zur relativen axialen Verschiebung zweier koaxial zueinander angeordneter und nur mittels hohem Pressdruck gegeneinander verschiebbarer Teile mit einer festen und einer durch Hydraulikzylinder geführten und relativ zu ihr axial bewegten Pressplatte, einem um die zu verpressenden Teile zu legenden Einschub und einer den Einschub geschlossen haltenden Verschlusstür.

Pressvorgänge dieser Art kommen beispielsweise beim Verpressen von Rohrenden oder Wellenverbindungen zur Anwendung (siehe beispielweise US 4 956 904, US 6 199 254 B1 oder DE 297 13 844 U1). Hohe Pressdrücke werden benötigt, weil die Reibung einer engen Passung überwunden und in vielen Fällen eine zusätzliche Materialverformung bewirkt werden muss. Ein typisches Beispiel ist das Einpressen und Auspressen von Spannzangen oder -hülsen in entsprechende Werkzeug- bzw. Spannzangenhalter in Werkzeugmaschinen (wie aus DE 10 2004 016 305 A1, aus US2008/02 906 14 A1 oder aus EP 1862 715 A1 bekannt).

Für bestimmte Ausführungsformen von Werkzeugaufnahmen, insbesondere solche mit geringer oder ohne Konizität von Spannzange und Aufnahmekonus, wie sie für Maschinen mit sehr hohen Drehzahlen bevorzugt werden, können die Spannzangen oder -hülsen mit dem eingesetzten Werkzeugschaft nicht ohne weiteres in die Aufnahme des Spannzangenhalters eingeführt und mit einer Spannmutter fixiert oder umgekehrt nach Lösen der Spannmutter wieder entnommen werden, sondern müssen mit hohem Druck ein- und auch wieder ausgepresst werden.

Für dieses Ein- und Auspressen gibt es verschiedene Lösungen, und zwar zum einen solche, bei denen die Vorrichtungen zum Erzeugen der notwendigen Axialkräfte Teil der Spannvorrichtung sind, und zum anderen separate Ein- und Auspressvorrichtungen. Letztere haben sich grundsätzlich bewährt, weil sie nicht zu einer Komplizierung der Spannvorrichtung führen. So ist eine Vorrichtung dieser Art bekannt, bei welcher ein die zu verpressenden Teile koaxial umgreifender Einschub in einer Pressvorrichtung geeignete Flansche der zueinander zu verschiebenden Teile hält. Der Einschub seinerseits kann durch eine auf einer Seite der Vorrichtung angeordnete Verschlusstür eingesetzt und entnommen werden und wird während des Pressvorganges durch einen Druckbolzen geschlossen gehalten. Die Verschlusstür ist an der feststehenden Pressplatte angelenkt. Durch die Relativbewegung des an der feststehenden Tür angebrachten Druckbolzens zum bewegten Backen des Einschubs während des Pressvorgangs ergeben sich trotz einer reibungsvermindernden kugeligen Ausbildung des Druckbolzens Eindrücke ins Material und Materialabrieb. Ausserdem verändert sich während des Pressvorganges die Druckwirkung auf den bewegten Backen, was zu dessen Öffnung führen kann.

Der Erfindung liegt die Aufgabe zugrunde, eine einfache und universal einsetzbare Pressvorrichtung zu schaffen, die von den Nachteilen bekannter Vorrichtungen dieser Art frei ist.

Erfindungsgemäss wird diese Aufgabe gelöst durch eine Pressvorrichtung mit den Merkmalen des Anspruchs 1.

Im Folgenden wird anhand der beiliegenden Zeichnungen eine Ein- und Auspressvorrichtung für Flachkonus-Spannzangen als bevorzugte Ausführungsform der Erfindung beschrieben.

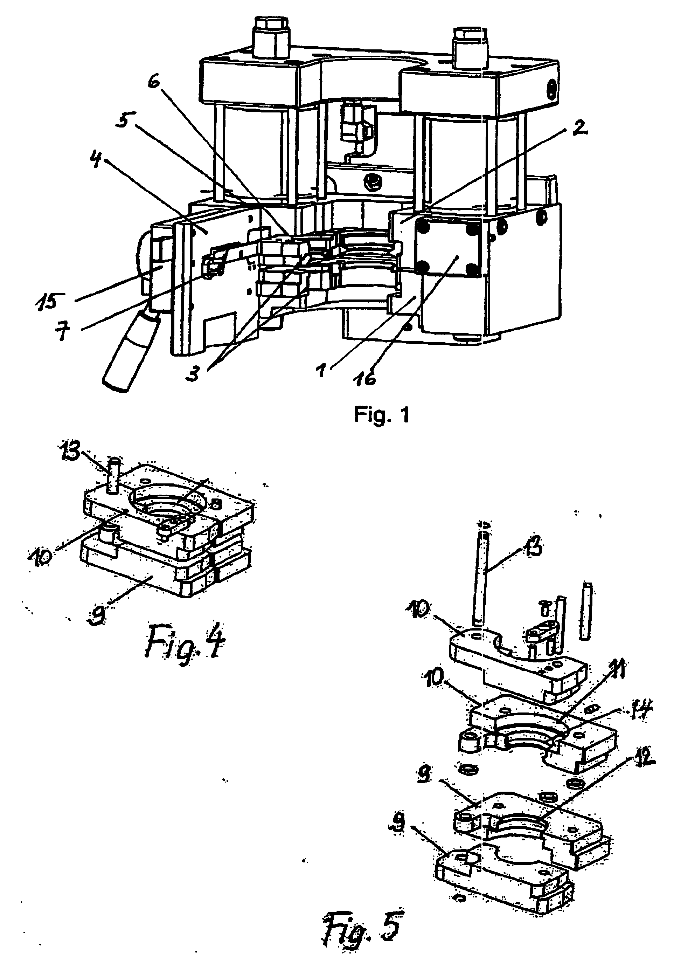

Es zeigen
- Fig. 1: eine perspektivische Ansicht einer Pressvorrichtung
- Fig. 2: eine Draufsicht mit geschlossener Tür
- Fig. 3: eine Draufsicht mit geöffneter Tür
- Fig. 4: eine perspektivische Ansicht eines Einschubs in die Pressvorrichtung
- Fig. 5: eine Explosionsdarstellung des Einschubs

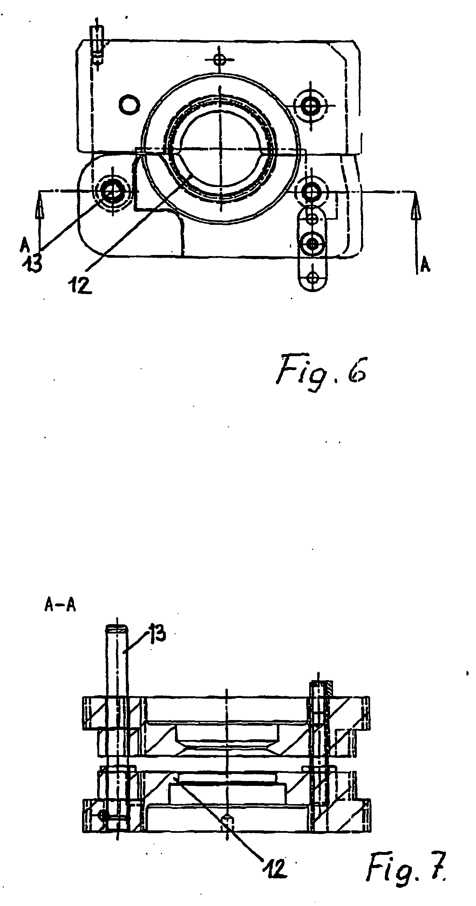

- Fig. 6: eine Draufsicht auf den Einschub
- Fig. 7: einen Schnitt durch den Einschub entlang der Linie A-A in Fig. 6

Die in den Figuren gezeigte Pressvorrichtung zum Ein- und Auspressen einer Flachkonus-Spannzange in einen bzw. aus einem Spannzangenhalter besteht aus einer unteren feststehenden Pressplatte 1, einer oberen axial beweglichen Pressplatte 2 und einem Einschub 3.

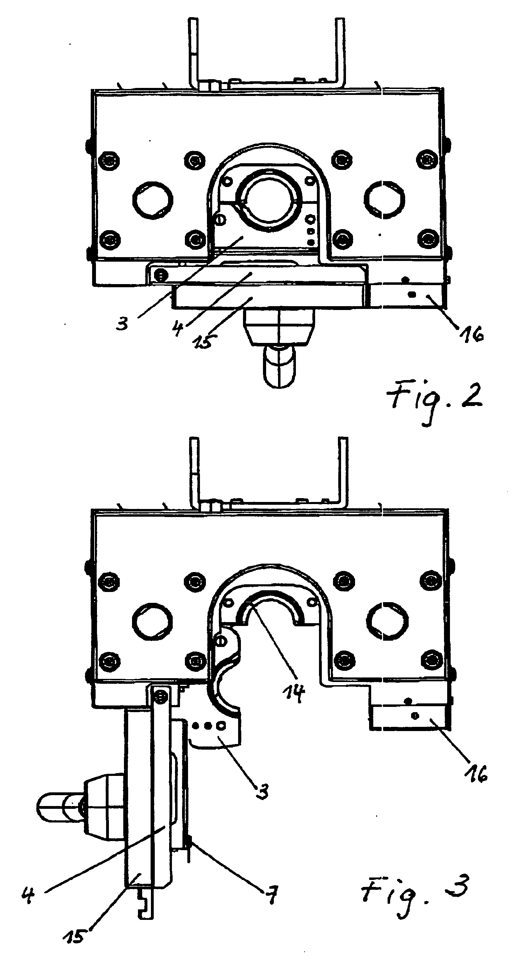

Wie in der Draufsicht der Fig. 2 und 3 ersichtlich, ist die obere, bewegliche Pressplatte 2 im Wesentlichen U-förmig ausgebildet. An ihrer offenen Seite ist eine Verschluss- und Haltetür 4 mittels eines Scharniers 5 am Ende eines Seitenschenkels der oberen, beweglichen Pressplatte 2 angelenkt. Die untere Pressplatte 1 besitzt die gleiche U-Form wie die obere Pressplatte 2 und ist somit ebenfalls auf einer Seite offen. An den einander zugewandten Seiten besitzen die Pressplatten Ausnehmungen 6 für die Aufnahme des Einschubs 3.

Die Verschluss- und Haltetür 4 besitzt an ihrer dem Scharnier gegenüberliegenden Seite einen Verschlussmechanismus 15 mit einem Riegel, der zum Schliessen in ein entsprechendes Schliesselement 16 am anderen Seitenschenkel der oberen, beweglichen Pressplatte eingreift. An ihrer Innenseite besitzt die Tür im Bereich des Verschlussmechanismusses einen Druckbolzen 7.

Hydraulikzylinder übernehmen in an sich bekannter weise die Führung und die Pressung zwischen den Pressplatten. Sie sind so nah wie möglich am Presszentrum bzw. an der Achse angeordnet, um eine Durchbiegung der Pressplatten so klein wie möglich zu halten.

Der Einschub besteht aus unteren Backen 9 und oberen Backen 10. Die Backen besitzen einander gegenüberliegende halbkreisförmige Ausnehmungen 11, welche die zu verpressenden Teile Spannzange und Spannzangenhalter vollumfänglich umschliessen. Zu diesem Zweck besitzen die unteren Backen eine umlaufende Eingriffkante 12, die eine für den Eingriff in eine entsprechende Nut des Spannzangenhalters geeignete Form aufweist. In gleicher Weise besitzen die oberen Backen eine umlaufende Eingriffkante 14 mit schrägen Flanken, die den entsprechenden konischen Flächen einer Spannzange angepasst sind. Die Backen sind mittels eines Bolzens 13 drehbar miteinander verbunden, so dass die auf einer Seite befindlichen Backen eine Halbschale und die auf der anderen Seite befindlichen Backen eine gegenüberliegende Halbschale bilden. Der Einschub kann somit zur Aufnahme bzw. zur Entnahme der zu verpressenden Teile geöffnet werden. Für unterschiedliche Grössen von Spannzange und Halter sind Einschübe mit verschieden grossen Ausnehmungen vorgesehen.

Für die Verpressung bzw. Auspressung wird der Einschub mit dem Spannzangenhalter und der Spannzange bei geöffneter Tür 4 in die Ausnehmungen 6 eingeschoben. Mit dem Schliessen der Tür wird der Druckbolzen 7 an den vorderen oberen Backen angepresst. Damit wird erreicht, dass dieser Backen die bei der Verpressung an den Schrägflächen auftretenden hohen Radialkräfte aufnehmen kann und das Öffnen der vorderen Halbschale des Einschubs verhindert wird.

Der Ein- oder Auspressvorgang ist gleich wie bei bekannten Vorrichtungen dieser Art. Zum Einpressen werden der Spannzangenhalter und die Spannzange zwischen die beiden Halbschalen des Einschubs eingefügt, der Einschub geschlossen und durch Schliessen der Tür gesichert. Mittels der Hydraulikzylinder werden die obere Pressplatte und damit die oberen Backen des Einschubs nach unten gedrückt und die Spannzange in die Aufnahme gepresst. Dadurch wird ein radialer Druck auf die Spannzange und infolge deren elastische Verformung auf den Werkzeugschaft ausgeübt.

Zum Auspressen werden die verpressten Teile in gleicher Weise in den Einschub eingelegt, wobei jedoch die obere Pressplatte durch eine Funktionsvorwahl vorher so weit nach unten gefahren wurde, dass die Eingriffkante der oberen Backen unter den Flansch der Spannzange greift. Wenn die Hydraulikzylinder betätigt werden, wird die obere Pressplatte nach oben bewegt und zieht den Spannzangenhalter von der Spannzange ab. Dadurch wird der radiale Druck auf die Spannzange und den Werkzeugschaft aufgehoben, so dass das Werkzeug entnommen werden kann.

## Patentansprüche

1. Pressvorrichtung zur relativen axialen Verschiebung zweier koaxial zueinander angeordneter und nur mittels hohem Pressdruck gegeneinander verschiebbarer Teile mit einer festen Pressplatte (1) und einer durch Hydraulikzylinder geführten und relativ zu ihr axial bewegten Pressplatte (2), einem um die zu verpressenden Teile zu legenden Einschub (3) und einer den Einschub geschlossen haltenden Verschlusstür (4), **dadurch gekennzeichnet, dass** die Verschlusstür an der bewegten Pressplatte (2) der Pressvorrichtung angelenkt ist.

2. Pressvorrichtung nach Anspruch 1, **dadurch gekennzeichnet, dass** der Einschub (3) feste Backen (9) und bewegte Backen (10) aufweist und die Verschlusstür mit einem Druckbolzen (7) versehen ist, der bei geschlossener Tür auf die bewegten Backen des Einschubs drückt.

## Claims

1. A pressing device for the relative axial movement of two parts which are arranged coaxially with respect to one another and are capable of being moved against one another only by means of high pressing force having a fixed pressing plate (1) and a pressing plate (2) which is guided and moved axially relative thereto by hydraulic cylinders, a slide-in module (3) to be placed around the parts to be pressed, and a locking door (4) which holds the slide-in module closed, **characterized in that** the locking door is hinged to the moving pressing plate (2) of the pressing device.

2. The pressing device as claimed in claim 1, **characterized in that** the slide-in module (3) has fixed jaws (9) and moving jaws (10) and the locking door is provided with a thrust pin (7) which presses on the moving jaws of the slide-in module when the door is closed.

## Revendications

1. Dispositif de compression pour le déplacement axial relatif de deux pièces, disposées coaxialement l'une par rapport à l'autre et ne pouvant se déplacer l'une contre l'autre que grâce à une forte pression de compression, comportant un plateau de compression (1) fixe et un plateau de compression (2), guidé par un vérin hydraulique et axialement mobile par rapport à l'autre, un insert (3) destiné à être placé autour des pièces à comprimer, et une porte de fermeture (4) qui maintient fermé l'insert, **caractérisé en ce que** la porte de fermeture est articulée par charnières au plateau mobile (2) du dispositif de compression.

2. Dispositif de compression selon la revendication 1, **caractérisé en ce que** l'insert (3) présente des joues fixes (9) et des joues mobiles (10), et la porte de fermeture est pourvue d'un boulon de pression (7) qui, quand la porte est en position fermée, appuie sur les joues mobiles de l'insert.
